# EUROPÄISCHE PATENTSCHRIFT

(11) **EP 1 463 902 B1**
(45) Veröffentlichungstag und Bekanntmachung des Hinweises auf die Patenterteilung: **04.05.2005**
(21) Anmeldenummer: 03757899.4
(22) Anmeldetag: 01.10.2003
(51) Int. Cl.: F16L 37/56

(54) **MEHRFACH-KUPPLUNGSEINRICHTUNG**
MULTICOUPLING DEVICE
DISPOSITIF A RACCORDS MULTIPLES

(30) Priorität: 01.10.2002 DE 10245742
(43) Veröffentlichungstag der Anmeldung: 06.10.2004
(73) Patentinhaber: Josef Martin GmbH & Co. KG, 6751 Braz (AT)
(72) Erfinder: MARTIN, Dietmar, A-6751 Braz (AT)
(74) Vertreter: Menges, Rolf, Dipl.-Ing.
(86) Internationale Anmeldenummer: PCT/EP2003/010876
(87) Internationale Veröffentlichungsnummer: WO 2004/031637

(56) Entgegenhaltungen:
- EP-A- 0 390 715
- WO-A-01/50057
- DE-A- 2 142 690
- US-A- 5 316 347

## Beschreibung

Die Erfindung betrifft eine Mehrfach-Kupplungseinrichtung für Leitungen, insbesondere Hydraulikleitungen, mit einer der Anzahl der herzustellenden Verbindungen entsprechenden Anzahl von Kupplungseinheiten, die jeweils einen Stecker und eine den Stecker aufnehmende Muffe aufweisen, und mit ersten und zweiten Kupplungsteilen, wobei an einem dieser Kupplungsteile der Stecker und am anderen dieser Kupplungsteile die Muffe einer jeweiligen Kupplungseinheit festgelegt ist, wobei die Kupplungseinheiten als selbstverriegelnde Rastkupplung ausgebildet sind, deren Muffen jeweils eine gegenüber der Muffe verschiebbare Verriegelungshülse aufweisen, wobei die beiden Kupplungsteile mittels Schaltelementen zusammenführbar und auseinanderdrückbar und in der Kupplungsstellung aneinander festlegbar sind, wobei die Verriegelungshülsen der jeweiligen Kupplungseinheit mit einer für alle Kupplungseinheiten gemeinsamen Schaltplatte, welche zwischen den beiden Kupplungsteilen liegt, zusammenwirken, wobei die Schaltplatte relativ zu einem Kupplungsteil in Schließ- und Öffnungsrichtung der Kupplungseinheiten verstellbar ist und wobei die beiden Kupplungsteile durch wenigstens ein an der Schaltplatte gelagertes Schaltelement mit Eingriff über wenigstens einen kurvenförmig verlaufenden Eingriffsschlitz und einen am anderen Kupplungsteil ausgebildeten Bolzen relativ zueinander in eine Schließ- und eine Öffnungsstellung bewegbar und in ihrer Schließstellung gegenseitig verriegelbar sind

Derartige Mehrfach-Kupplungseinrichtungen zum Verbinden und Trennen mehrerer Paare von Hydraulikleitungen sind bekannt. Diese Mehrfach-Kupplungseinrichtungen werden insbesondere dazu verwendet, dass die einzelnen Hydraulikleitungen nicht falsch miteinander verbunden werden können. Dazu werden die ersten und zweiten Kupplungsteile so ausgebildet, dass ein Zusammenführen dieser Kupplungsteile und dadurch ein Verbinden der Stecker und der Muffen der einzelnen Kupplungseinheiten nur in einer Ausrichtung der beiden Kupplungsteile möglich ist.

Um die beiden Kupplungsteile in der zusammengeführten Stellung festzulegen, in der die Stecker und Muffen der einzelnen Kupplungseinheiten miteinander verbunden sind, sind bei den bekannten Mehrfach-Kupplungseinrichtungen mechanische Verbindungselemente zwischen dem ersten und dem zweiten Kupplungsteil vorgesehen. Beispielsweise wird bei einer bekannten Mehrfach-Kupplungseinrichtung zu diesem Zweck eine Kulissenführung verwendet. Hierbei sind an einem der Kupplungsteile zu beiden Seiten dieses Kupplungsteiles über eine Schwenkachse verbundene, von einem Hebel verdrehbare Platten angeordnet. Dies weisen jeweils einen am Seitenrand der Platte beginnenden bogenförmigen Schlitz auf, dessen Abstand von der Schwenkachse in seinem Verlauf abnimmt. Am anderen Kupplungsteil sind zwei seitlich abstehende Zapfen vorgesehen. Durch Zusammenführen der beiden Kupplungsteile soweit, bis die Zapfen in den Anfangsbereichen der Schlitze liegen, und anschließendes Verschwenken des Schwenkhebels werden die beiden Kupplungsteile bis zum vollständigen Eingriff der jeweiligen Stecker in die Muffen aneinander herangeführt und in dieser Stellung verriegelt. Die von den beiden Kupplungsteilen im geschlossenen Zustand der Mehrfach-Kupplungseinrichtung auf die mechanischen Verbindungselemente ausgeübte Kraft entspricht der Summe der von den einzelnen Kupplungseinheiten infolge des Drucks des Hydrauliköls ausgeübten Kräfte. Aufgrund der Begrenzung der von den mechanischen Verbindungselementen aufnehmbaren Kräfte sind die in den einzelnen Hydraulikleitungen zulässigen Drücke auf einen relativ geringen Wert beschränkt.

Diverse konstruktive Gestaltungen solcher Mehrfachkupplungseinrichtungen sind beispielsweise aus der US-A-5316347, der US-A-5507530, der US-A-4615546 bekannt. Ferner ist bei einer weiteren bekannten Ausgestaltung (US-A-3527480) vorgesehen, eine auf der Muffe eine veschiebbare Verriegelungshülse anzuordnen, welche dann mit einem Kupplungsteil fest verbunden wird. Es ist dann jedoch für den Stecker selbst beim Einführvorgang in die Muffe keine spezielle Halterung und somit keine exakte Ausrichtung gewährleistet.

Weiter ist eine Ausgestaltung bekannt geworden (EP-A-0390715), bei der der Stecker, die Muffe und eine Verriegelungshülse jeweils fest mit einem Kupplungsteil fest verbunden sind, wobei eine recht komplizierte Kulissensteuerung erforderlich ist, um diese Kupplungsteile relativ zueinander zu bewegen und schlussendlich gegenseitig gegen Verschieben zu sichern.

Ferner ist aus der WO01/50057 eine Mehrfach-Kupplungseinrichtung bekannt, bei der die Kupplungseinheiten als selbstverriegelnde Rastkupplungen ausgebildet sind, deren Muffen jeweils eine gegenüber der Muffe verschiebbare Verriegelungshülse zum Öffnen der Rastkupplung aufweisen, wobei die Verriegelungshülse der Muffe einer jeweiligen Kupplungseinheit an dem ersten oder zweiten Kupplungsteil festgelegt ist und der Muffenkörper gegenüber diesem Kupplungsteil längsverschiebbar ist. Die Verriegelungshülse ist von einer Befestigungsbuchse umgeben, die im ersten oder zweiten Kupplungsteil festgelegt ist, zweckmäßig in dieses eingeschraubt ist. Die Verriegelungshülse ist damit nach außen hin abgedeckt und kann nur bei Bewegung eines der beiden Kupplungsteile bewegt werden, bis eine Möglichkeit des Auskuppelns geschaffen ist.

Die Aufgabe der vorliegenden Erfindung liegt darin, eine Mehrfach-Kupplungseinrichtung der eingangs genannten Art so auszubilden, dass in einfacher Weise die Verriegelungshülsen aller eingesetzter Kupplungseinheiten in der Schließstellung gesichert sind und auch in einfacher Weise eine Entriegelung stattfinden kann.

Erfindungsgemäß gelingt dies dadurch, dass das Schaltelement an einer parallel zur Ebene der Schaltplatte verlaufenden Achse an dieser Schaltplatte drehbar gehalten ist, dass die Achse zur Aufnahme des Schaltelementes von einem in der Schaltplatte gelagerten Welle oder von zwei Wellenstummeln gebildet ist, dass die Welle im Bereich zwischen der Schaltplatte und den Schaltelementen in ein Langloch an einem Wandlungsteil des einen Kupplungsteiles eingreift und dass die Schaltplatte unabhängig von den Verriegelungshülsen bewegbar ist.

Durch diese erfindungsgemäßen Maßnahmen wird erreicht, dass die Verriegelungshülsen in der Öffnungsstellung der Kupplungseinheiten immer in jener Stellung sind, in der ein Zusammenstecken von Stecker und Muffe ermöglicht wird. In einfacher Weise wird dann noch die Verringerung der Verschiebefreiheit der Verriegelungshülse durch die am einen Ende der Verriegelungshülse anstehende Schaltplatte erreicht. Es bedarf also keiner direkten festen mechanischen Verbindung zwischen der Schaltplatte und den Verriegelungshülsen.

Dadurch ist aber auch der konstruktive Aufbau der gesamten Mehrfach-Kupplungseinrichtung einfacher, sicherer und störungsunanfälliger geworden. Durch die Anordnung der Drehachse der Schaltelemente in einer zwischen den Kupplungsteilen liegenden Schaltplatte ist nicht nur die einfache Verriegelung der Kupplungseinheiten mittels der Verriegelungshülsen möglich, sonder es ist gleichzeitig eine optimale Relativbewegung zwischen den beiden Kupplungsteilen zum Zusammenführen und Auseinanderfahren der Kupplungseinheiten durch an sich bekannte Eingriffsschlitze und Bolzen ermöglicht worden.

Dadurch ist die Möglichkeit gegeben, nach dem kompletten Einführung der Steckteile in die Muffen durch Weiterbewegung der Schaltelemente eine Relativbewegung zwischen dem einen Kupplungsteil und der Schaltplatte zu bewirken, um dadurch die Verriegelungshülse in die Sperrstellung zu verschieben oder den Bewegungsbereich der Verriegelungshülse soweit einzugrenzen, dass sich die Kupplungseinheiten nicht lösen können, zumal eine gegenseitige Kugelverriegelung zwischen Stecker und Muffe dann nicht aufgehoben werden kann.

Da die Schaltplatte unabhängig von den Verriegelungshülsen bewegbar ist, ist stets gewährleistet, dass zuerst voll gekuppelt wird und dass erst anschließend die Verriegelungshülsen verschoben werden. Im Gegensatz dazu sind bei der Ausführung nach der AT-E-84864 (=EP0390715A1) die Verriegelungshülsen an der Schaltplatte fixiert und werden bei der Bewegung der Schaltplatte mitgenommen. Bei der Mehrfachkupplung nach der Erfindung ist das Schaltelement an der Schaltplatte gelagert. Die Schaltplatte ist daher unabhängig von den Verriegelungshülsen bewegbar.

Zur weiteren Absicherung der Kupplungseinrichtung in geschlossener Stellung, wenn also die Leitungen und die Kupplungseinheiten unter hohem Druck stehen, wird vorgeschlagen, dass die beiden Kupplungsteile durch zusätzliche Verriegelungselemente selbsttätig in der Schließstellung verriegelbar sind. Damit kann nicht einfach eine gegebenenfalls noch unter Druck stehende Kupplungseinrichtung unbeabsichtigt durch verstellen der Schaltelemente geöffnet werden.

In diesem Zusammenhang ist es vorteilhaft, wenn die zusätzlichen Verriegelungselemente als federnd einrastende, selbsttätig verriegelbare Laschen, Bolzen, Riegel od.dgl. ausgebildet sind. Es erfolgt dann gleich beim Schließen der Mehrfach-Kupplungseinrichtung eine selbsttätige zusätzliche Verriegelung der Kupplungsteile, auch wenn diese nicht durch den nachfolgenden Druckaufbau in den Kupplungseinheiten belastet sind.

Besonders vorteilhaft ist es dann noch, wenn die Laschen, Bolzen; Riegel od.dgl. von Hand in die Freigabestellung bringbar sind. Daher muss diese zusätzliche Verriegelungslasche immer zuerst bewusst gelöst werden, bevor die Mehrfach-Kupplungseinrichtung geöffnet werden kann.

Bei einer besonderen Ausgestaltung wird vorgeschlagen, dass das Verriegelungselement in Form eines federbelasteten Bolzens dem Betätigungshebel zugeordnet ist und bei geschlossener Kupplungseinrichtung hinter einer Sperrrampe einrastet, wobei dieser federbelastete Bolzen durch einen am freien Ende des Betätigungshebels ausgebildeten Druckknopf auslösbar ist. Dadurch muss die Bedienungsperson wohl vorerst ein zusätzliches Verriegelungselement lösen, es kann aber das Öffnen selbst mit einer Hand bewerkstelligt werden. Damit kann mit der anderen Hand der oben liegende Kupplungsteil gehalten werden, ohne dass dieser bei einer entsprechenden Lage nicht von selbst herunterfallen kann.

Durch die besondere Konstruktion ist auch eine einfache gegenseitige Ausrichtung der Kupplungsteile und somit der Kupplungseinheiten möglich geworden. Dabei ist es besonders vorteilhaft, wenn die Kupplungsteile und die Schaltplatte entlang einem gemeinsamen, in deren Mittelbereich diese durchstoßenden Führungsrohr verschiebbar geführt sind.

Für einen einfach Handhabung der erfindungsgemäßen Mehrfach-Kupplungseinrichtung ist es weiter von besonderem Vorteil, wenn an einem oder an beiden Enden der Welle oder an beiden Wellenstummeln ein Betätigungshebel anschließt. Es ist dadurch ein trotz der Überwindung von Federkräften einfaches und sicheres Schließen und Öffnung der Mehrfachkupplungseinrichtung gewährleistet.

Um eine gute Kraftverteilung zu erreichen und ein Verkanten zu verhindern, ist es vorteilhaft, wenn, dass an beiden Enden der Welle oder an beiden Wellenstummeln Schaltelemente angesetzt sind.

Dabei ist eine Ausgestaltung möglich, bei der die an den beiden Enden der Welle oder im Bereich der beiden Wellenstummel angesetzten Schaltelemente Betätigungshebel aufweisen, deren freie Enden über einen Handhabegriff miteinander verbunden sind. Damit ist auch eine gute Handhabung gewährleistet.

Es ist ferner auch möglich, dass an beiden Enden der durchgehenden Welle Schaltelemente mit Eingriffsschlitzen angeordnet sind, wobei nur an einem auf einer Seite angeordneten Schaltelement ein Betätigungshebel ausgebildet ist. Die Kraft wird dann nur von dem auf einer Seite angeordneten Betätigungshebel aufgebracht.

Für eine ordnungsgemäße Funktion der Verriegelungshülse in der Schließstellung der Kupplungseinheiten ist es von besonderem Vorteil, wenn die Schaltplatte in Richtung der Öffnungsstellung der Kupplungseinheiten und/oder die Verriegelungshülsen in Richtung deren Sperrstellung federbelastet ausgeführt sind. Es bedarf zum Lösen der Verriegelungshülsen also nur der Überwindung der Federkraft der Schaltplatte und/oder der Verriegelungshülse.

Eine andere Ausführungsvariante der Erfindung liegt noch darin, dass das Schaltelement von wenigstens einer zwischen den Kupplungsteilen angeordneten Schaltkulisse gebildet ist. Es kann dann von außen her kein direkter Eingriff vorgenommen werden. Es ist in diesem Zusammenhang auch ein elektrisches, pneumatisches oder hydraulisches Zusammenführen und Auseinanderdrücken der Kupplungsteile möglich.

Gerade bei Anordnung einer Schaltkulisse im Inneren der Kupplungseinrichtung liegt eine vorteilhafte Ausgestaltung darin, dass die im Innenbereich zwischen den Kupplungsteilen vorgesehene Schaltkulisse von einem an der Welle gehaltenen Schaltelement und einem am anderen Kupplungsteil gehaltenen Bolzen gebildet ist. In diesem Zusammenhang sieht eine besondere konstruktive Ausführungsform vor, dass das Schaltelement in einem Schlitz des Führungsrohres liegt und verdrehfest mit der Welle verbunden ist und der mit dem Schaltelement zusammenwirkende Bolzen in einen Schlitz des Führungsbolzens eingesetzt ist. Das oder die Schaltelement(e) sind dadurch von außen nicht unmittelbar beeinflussbar geschützt angeordnet, was gerade bei dem rauhen Baustellenbetrieb von wesentlichem Vorteil ist.

Eine besondere konstruktive Ausgestaltung liegt darin, dass an zwei einander gegenüberliegenden Rändern der Schaltplatte Lagerhülsen für die Welle oder die Wellenstummel vorgesehen sind, wobei diese Lagerhülsen über die Ränder der Schaltplatte vorstehen und in Langlöchern in den Wandungsteilen des einen Kupplungsteiles eingreifen und somit in diesen quer zur Achse verschiebbar geführt sind. Damit ist eine optimale Lagerung der Welle für die Schaltelemente möglich und ferner ist auch die gegenseitige Führung und Relatiwerschieblichkeit zwischen Schaltplatte und dem einen Kupplungsteil störungsfrei gelöst.

Für eine einfach Handhabung vor dem Schließen und vor dem Entfemen des anderen Kupplungsteiles bei der Mehrfach-Kupplungseinrichtung ist es vorteilhaft, wenn an wenigstens einem der Kupplungsteile an zwei einander gegenüberliegenden Begrenzungen Handgriffe zum Anheben und zum Transport angeordnet sind.

Weitere erfindungsgemäße Merkmale und besondere Vorteile werden in der nachstehenden Beschreibung anhand der Zeichnungen noch näher erläutert. Es zeigen:

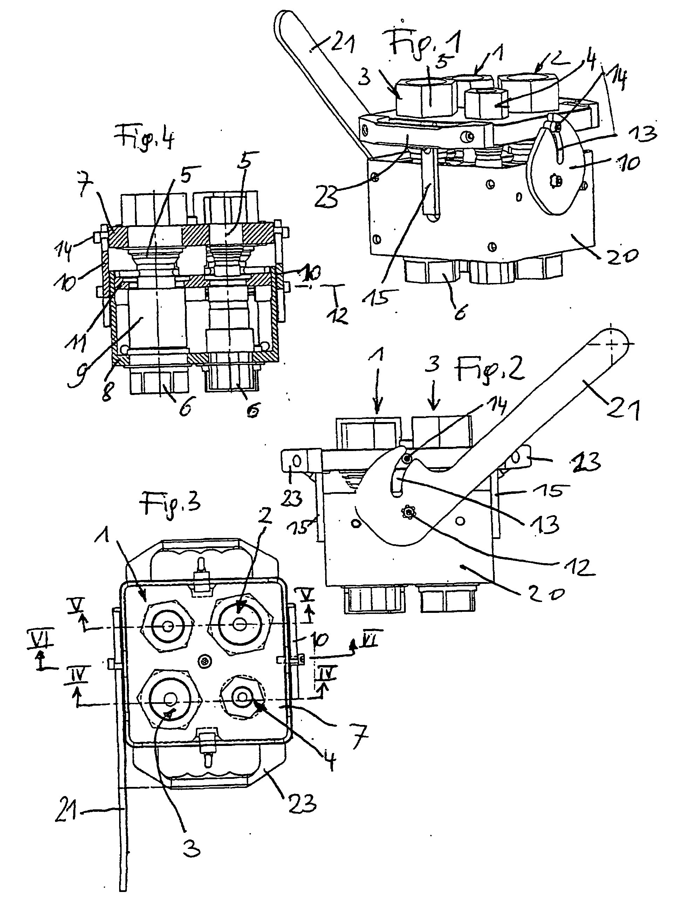

Fig.1 eine Schrägsicht einer Mehrfach-Kupplungseinrichtung;
Fig.2 eine Seitenansicht der Mehrfach-Kupplungseinrichtung;

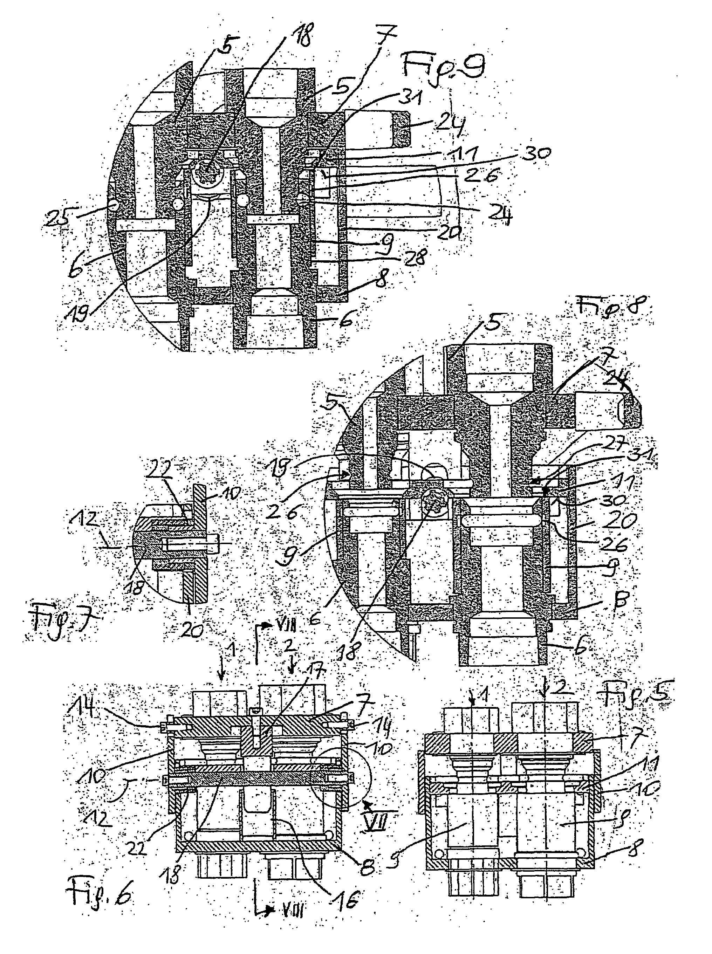

Fig.3 eine Draufsicht;
Fig.4 einen Schnitt nach der Linie IV-IV in Fig.3;
Fig.5 einen Schnitt nach der Linie V-V in Fig.3;
Fig.6 einen Schnitt nach der Linie VI-VI in Fig.3;
Fig.7 eine vergrößerte Detailansicht VII in Fig.6;
Fig.8 einen vergrößerten Schnitt nach der Linie VIII-VIII in Fig.6 durch einen Teilbereich, wobei die Kupplungseinheiten in geöffnetem Zustand dargestellt sind;
Fig.9 einen vergrößerten Schnitt nach der Linie VIII-VIII in Fig.6 durch einen Teilbereich, wobei die Kupplungseinheiten in geschlossenem Zustand dargestellt sind.

Beschrieben wird hier eine Mehrfach-Kupplungseinrichtung für Leitungen, insbesondere Hydraulikleitungen, mit einer der Anzahl der herzustellenden Verbindungen entsprechenden Anzahl von Kupplungseinheiten 1 bis 4. Jede dieser Kupplungseinheiten 1 bis 4 weist jeweils einen Stecker 5 und eine den Stecker 5 aufnehmende Muffe 6 auf, wobei die Stecker 5 mit einem ersten Kupplungsteil 7 und die Muffen 6 mit einem zweiten Kupplungsteil 8 fest verbunden sind. Die Kupplungseinheiten 1 bis 4 sind als selbstverriegelnde Rastkupplung ausgebildet, deren Muffen 6 jeweils eine gegenüber der Muffe 6 verschiebbare Verriegelungshülse 9 aufweisen. Die beiden Kupplungsteile 7 und 8 sind mittels Schaltelementen 10 zusammenführbar und auseinanderdrückbar, wobei diese dann in der Kupplungsstellung aneinander festlegbar sind.

Beim gezeigten Beispiel sind vier Kupplungseinheiten 1 bis 4 dargestellt, welche mit den beiden Kupplungsteilen 7 und 8 verbunden sind und daher gleichzeitig geschlossen und geöffnet werden können. Im Rahmen der Erfindung ist es auch möglich, nur eines oder zwei solcher Kupplungseinheiten vorzusehen oder aber auch ein entsprechend Vielfaches an solchen Kupplungseinheiten. Dabei ist es gleichgültig, ob nun lauter gleich große Kupplungseinheiten 1 bis 4 vorgesehen sind oder diverse unterschiedlich große. Es sind nur kleine konstruktive Maßnahmen erforderlich, die bewirken, dass eine gemeinsames Schließen und Öffnen ermöglicht wird. Eine dieser Maßnahmen kann sein, dass die Stecker 5 und/oder die Muffen 6 in verschiedenen Lagen gegenüber den Kupplungsteilen 7 und 8 montiert werden.

Die Verriegelungshülsen 9 der jeweiligen Kupplungseinheit 1 bis 4 wirken mit einer für alle Kupplungseinheiten 1 bis 4 gemeinsamen Schaltplatte 11, welche zwischen den beiden Kupplungsteilen 7 und 8 liegt, zusammen. Das Schaltelement 10 ist an einer parallel zur Ebene der Schaltplatte 11 verlaufenden Achse 12 an dieser Schaltplatte 11 drehbar gehalten. Dabei ist die Schaltplatte relativ zu dem einen Kupplungsteil 8 in Schließ- und Öffnungsrichtung der Kupplungseinheiten 1 bis 4 verstellbar. Die beiden Kupplungsteile 7 und 8 sind durch die an der Schaltplatte 11 gelagerten Schaltelemente 10 mit Eingriff über kurvenförmig verlaufende Eingriffsschlitze 13 und am anderen Kupplungsteil 7 vorstehende Bolzen 14 relativ zueinander in eine Schließ- und eine Öffnungsstellung relativ zueinander bewegbar und in ihrer Schließstellung gegenseitig verriegelbar.

Die beiden Kupplungsteile 7 und 8 sind durch zusätzliche Verriegelungselemente 15 selbsttätig in der Schließstellung verriegelbar. Diese zusätzlichen Verriegelungselemente 15 sind vorteilhaft als federnd einrastende, selbsttätig verriegelbare Laschen, Bolzen, Riegel od.dgl. ausgebildet und können ferner in sinnvoller Weise von Hand in die Freigabestellung gebracht werden. Natürlich sind auch andere Sicherheitsvorkehrungen möglich, doch scheint gerade eine solch einfache Konstruktion eine maximale Sicherheit zu bieten, um zu verhindern, dass in unbefugter oder in unbedachter Weise versucht werden sollte, eine unter Druck stehende Mehrfach-Kupplungseinrichtung zu öffnen.

Die Zentrierung und somit die gemeinsame Ausrichtung der beiden Kupplungsteile 7 und 8 kann auf verschiedene Art und Weise erfolgen. Eine sehr einfache Konstruktion ist beim Ausführungsbeispiel verwirklicht. Die Kupplungsteile 7 und 8 und die Schaltplatte 11 sind hier entlang einer gemeinsamen, in deren Mittelbereich diese durchstoßenden Führungsrohr 16 und einen Führungsbolzen 17 verschiebbar geführt. Der Führungsbolzen 17 ist dabei zum quer dazu verlaufenden Durchtritt einer Welle 18 mit einem Längsschlitz ausgeführt.

Die Achse 12 zur Aufnahme des Schaltelementes 10 ist von einem in der Schaltplatte 11 gelagerten Welle 18 oder von Wellenstummeln gebildet. Bei Anordnung einer durchgehenden Welle 18 ist die größte Sicherheit des gleichmäßigen Schließens und Öffnens der Kupplungseinheiten 1 bis 4 gewährleistet, da ein Verkanten bei der Schließ- und Öffnungsbewegung durch den Gleichlauf der Schaltelemente 10 praktisch ausgeschlossen wird.

Die Welle 18 greift im Bereich zwischen der Schaltplatte 11 und den Schaltelementen 10 in ein Langloch 19 an einem Wandungsteil 20 des einen Kupplungsteiles 6 ein.

Bei einer besonderen konstruktiven Ausgestaltung sind an zwei einander gegenüberliegenden Rändern der Schaltplatte 11 Lagerhülsen 22 für die Welle 18 oder die Wellenstummel vorgesehen. Diese Lagerhülsen 22 stehen über die Ränder der Schaltplatte 11 vor und greifen in die Langlöcher 19 in den Wandungsteilen 20 des einen Kupplungsteiles 6 ein, so dass dadurch die Schaltplatte 11 quer zur Achse 12 verschiebbar in den Wandungsteilen 20 geführt ist.

An beiden Enden der Welle 18 oder an beiden Wellenstummeln sind dann die Schaltelemente 10 angesetzt. Diese an den beiden Enden der Welle 18 oder im Bereich der beiden Wellenstummel angesetzten Schaltelemente 10 weisen Betätigungshebel 21 aufweisen, deren freie Enden über einen Handhabegriff miteinander verbunden sein können. Bei Anordnung einer durchgehenden Welle 18 können aber auch an beiden Enden der durchgehenden Welle 18 Schaltelemente 10 mit Eingriffsschlitzen 13 angeordnet sein, wobei nur an einem auf einer Seite angeordneten Schaltelement 10 ein Betätigungshebel 21 ausgebildet ist. Trotzdem ist infolge der durchgehenden Welle 18 ein synchroner Bewegungsablauf gewährleistet.

Für eine optimale Funktion der Mehrfach-Kupplungseinrichtung wird vorgesehen, dass die Schaltplatte 11 in Richtung der Öffnungsstellung der Kupplungseinheiten 1 bis 4 und/oder die Verriegelungshülsen 9 in Richtung deren Sperrstellung federbelastet ausgeführt sind.

Anstelle der seitlich außen liegenden Schaltelemente 10 kann auch wenigstens eine zwischen den Kupplungsteilen 7 und 8 angeordnete Schaltkulisse vorgesehen werden. Bei einer Mehrfach-Kupplungseinrichtung mit vier Kupplungseinheiten 1 bis 4 kann beispielsweise eine einzige Schaltkulisse in der Mitte zwischen den vier Kupplungseinheiten 1 bis 4 vorgesehen werden. Wenn dann beispielsweise sechs oder mehr solcher Kupplungseinheiten gemeinsam in einer Kupplungseinrichtung untergebracht sind, besteht die Möglichkeit, zwei oder mehr als zwei Schaltkulissen vorzusehen, die dann aber nach wie vor von einer gemeinsamen Welle 18 aus betätigt werden könnten.

Bei einer solchen Konstruktion ist die im Innenbereich zwischen den Kupplungsteilen 7 und 8 vorgesehene Schaltkulisse von einem an der Welle 18 gehaltenen Schaltelement 10 und einem am anderen Kupplungsteil 7 gehaltenen Bolzen (entsprechend dem Bolzen 14) gebildet. Das Schaltelement 10 kann dabei in einem Schlitz des Führungsrohres 16 liegen und ist verdrehfest mit der Welle 18 verbunden. Der mit dem Schaltelement 10 zusammenwirkende Bolzen 14 ist dann in einen Schlitz des Führungsbolzens 17 eingesetzt. Der Führungsbolzen 17 hat beii einer solchen Konstruktion zwei einander kreuzende Längsschlitze. Zum einen ist ein Schlitz vorhanden, um den Führungsbolzen 17 über die das Führungsrohr 16 durchdringende Welle 18 schieben zu können. Zum anderen ist ein Schlitz vorzusehen, in welchem das Schaltelement sich geführt verdrehen und den in diesem Schlitz angeordneten Bolzen 14 erfassen kann. Bei einer Konstruktion dieser Art kann eine zusätzliche Variante miteingebracht werden, welche für eine sichere Verriegelung der Kupplungseinheiten 1 bis 4 sorgen kann. Dabei kann die Verriegelung mit dem Schaltelement und dem Bolzen so gewählt werden, dass vor der unmittelbaren gegenseitigen Endstellung der Kupplungseinheiten der Führungsbolzen 17 nicht mehr weiter in das Führungsrohr 16 eingeschoben werden kann. Dem Führungsbolzen 17 ist dabei ein Federelement - beispielsweise in Form einer Tellerfeder oder eines Tellerfederpaketes - zugeordnet, so dass der Führungsbolzen 17 bei ganz geschlossener Kupplungseinrichtung etwas entgegen der Kraft des Federelementes angehoben ist. Es werden daher die Kupplungseinheiten 1 bis 4 in Schließrichtung federbelastet angedrückt.

Zur einfacheren Handhabung sind an wenigstens einem der Kupplungsteile 7 und 8 an zwei einander gegenüberliegenden Begrenzungen Handgriffe 23, 24 zum Anheben und zum Transport angeordnet.

Der Ablauf eines Schließvorganges und in gleicher Weise eines Öffnungsvorganges der Mehrfach-Kupplungseinrichtung ist in besonderer Weise anhand der Fig. 8 und 9 zu erläutern. Unmittelbar nach dem Aufsetzen des Kupplungsteiles 7 mit den Steckern 5 auf den Kupplungsteil 8 mit den Muffen 6 und den Verriegelungshülsen 9 und der integrierten Schaltplatte 11 sind die Teile in einer Stellung, wie sie in Fig. 8 ersichtlich ist. Die Verriegelungshülse 9 ist in einer Stellung, in der die zur Verriegelung vorgesehenen Kugeln 24, 25 (siehe in Fig. 9) in die Nut 26 in der Verriegelungshülse 9 ausweichen können. Hier ist somit auch die Stellung nach dem Öffnen der Mehrfach-Kupplungseinrichtung gezeigt. In dieser Stellung kann bei einem beginnenden Schließvorgang der Stecker 5 in die Muffe 6 eindringen, da die Verriegelungskugeln nach außen ausweichen können.

Beim Schließvorgang werden durch Bewegung des Betätigungshebels 21 die Schaltelemente 10 um die Achse 12 gedreht. Die Schaltelemente 10 ergreifen dabei über den Einführschlitz 13 die Bolzen 14 am anderen Kupplungsteil 7, so dass die Kupplungsteile 7 und 8 relativ zueinander hin bewegt werden, und zwar so weit, bis die Kupplungseinheiten 1 bis 4 (Stecker 5 und Muffen 6) ganz geschlossen sind. Nun könnte auch die Verriegelungshülse verschoben werden, da ja die zur Verriegelung vorgesehenen Kugeln 24, 25 in die entsprechenden Öffnungen 27, 28 am vorderen Endbereich der Stecker 5 eindringen können.

Sobald diese erste Schließstellung erreicht ist, wird durch weitere Bewegung des Betätigungshebels bewirkt, dass die Schaltplatte 11 entgegen einer Federkraft relativ zum Kupplungsteil 8 verschoben wird. Dies wird eben dadurch erreicht, weil die Schaltplatte 11 bzw. die Welle 18 in ein Langloch 19 am einen Kupplungsteil 8 eingreift. Die Verriegelungshülse 9 kann dadurch von der Öffnungsstellung in eine Sperrstellung gelangen, da eben ein entsprechender Bewegungsbereich freigegeben wird. Es wird somit eine Art Ringspalt 28 gebildet, wobei um die axiale Länge dieses Ringspaltes 28 die Verriegelungshülse 9 an der Muffe 6 verschoben werden kann, wobei dazu die Verriegelungshülse zweckmäßigerweise federnd belastet in dieser Sperrstellung gehalten wird.

Als zusätzliche Sicherung rastet hier dann noch das Verriegelungselement 15 ein, so dass eine insgesamt eine Kupplungseinrichtung geschaffen ist, welche unabhängig vom Druck in den Leitungen und den Kupplungseinheiten ohne besondere Belastung auf die Schaltelemente 10 geschlossen gehalten wird, wobei dann eben zusätzlich noch die Öffnungssicherung vorhanden ist.

Wenn nun die Mehrfach-Kupplungseinrichtung gelöst (geöffnet) werden soll, dann muss natürlich zuerst die Verriegelungselement 15 gelöst werden. Dann ist die Sperrstellung der Verriegelungshülse 9 aufzuheben. Dies geschieht dann in einfacher Weise wieder durch Bewegung des Betätigungshebels in die andere Drehrichtung. Es wird somit vorerst die rückführende Relativbewegung der Schaltplatte 11 bewirkt, wobei dadurch die Begrenzungsfläche 30 der Schaltplatte, gegen das eine Ende 31 der Verriegelungshülse 9 anstößt und diese in Richtung auf die Öffnungsstellung verschiebt. Erst wenn die Verriegelungshülse 9 soweit verschoben ist, dass die Nut 26 auf der Höhe der verriegelnden Kugeln 24, 25 liegt, wird beim Weiterbewegen des Betätigungshebels 21 das Auseinanderbewegen der beiden Kupplungsteile 7 und 8 bewirkt. In dieser Stellung ist auch die Welle 18 bzw. sind die Lagerhülsen 22 in einer Stellung am anderen Ende des Langloches 19. Nachdem die Kugeln 24, 25 nun von der Verriegelungsstellung zwischen Stecker 5 und Muffe 6 in die Stellung zwischen Muffe 6 und Verriegelungshülse 9 ausweichen können, kann die Verbindung der Kupplungseinheiten 1 bis 4 gelöst werden. Die einzelnen Elemente sind dann wieder in der Stellung wie in Fig. 8 dargestellt.

Bei der Ausgestaltung des Verriegelungselementes 15 sind verschiedene Ausführungsvarianten möglich. So kann dieses beispielsweise in Form eines federbelasteten Bolzens dem Betätigungshebel 21 zugeordnet sein. Dieser federbelastete Bolzen kann dann bei geschlossener Kupplungseinrichtung hinter einer Sperrrampe - welche beispielsweise an der Außenfläche des Wandungsteiles 20 ausgebildet ist - einrasten. Zum Auslösen diese federbelasteten Bolzens kann am freien Ende des Betätigungshebels 21 ein entsprechender Druckknopf ausgebildet sein. Auch sind irgendwelche andere Auslöseteile möglich, welche die Sperre durch den Bolzen aufheben können.

Als weitere Ausgestaltung ist noch anzuführen, dass eine Art Sichtkontrolle möglich wäre, um festzustellen, dass tatsächlich alle Kupplungseinheiten auch geschlossen sind. Zu diesem Zweck können mit den Verriegelungshülsen zusammenwirkende Bolzen vorgesehen werden, welche auf am anderen Kupplungsteil korrespondierend dazu angeordnete, federnde Bolzen in geschlossenem Zustand der Kupplungseinheiten auftreffen. Wenn die Kupplungseinheiten 1 bis 4 ordnungsgemäß geschlossen sind und somit die Verriegelungshülsen 9 in der Sperrstellung sind, dann werden die federnden Bolzen über die Oberfläche des Kupplungsteiles 7 vorgeschoben, so dass visuell festgestellt werden kann, ob alle Kupplungseinheiten ordnungsgemäß geschlossen sind oder ob gegebenenfalls eine oder mehrere derselben noch nicht geschlossen sind, Es kann daher vor dem Druckaufbau nochmals ein neuerlicher Kontroll- und Schließvorgang durchgeführt werden.

Im Rahmen der Erfindung sind diverse konstruktive Änderungen möglich, ohne dabei die wesentlichen erfinderischen Merkmale wegzulassen. Mit der erfindungsgemäßen Mehrfach-Kupplungseinrichtung kann eine Ausgestaltung geschaffen werden, die auch auf dem sonst störungsanfälligen Baustellenbetrieb, aber auch in der Industrie optimale Möglichkeiten mit sich bringt.

## Patentansprüche

1. Mehrfach-Kupplungseinrichtung für Leitungen, insbesondere Hydraulikleitungen, mit einer der Anzahl der herzustellenden Verbindungen entsprechenden Anzahl von Kupplungseinheiten (1-4), die jeweils einen Stecker und eine den Stecker aufnehmende Muffe aufweisen, und mit ersten und zweiten Kupplungsteilen (7, 8), wobei an einem dieser Kupplungsteile der Stecker und am anderen dieser Kupplungsteile die Muffe einer jeweiligen Kupplungseinheit festgelegt ist, wobei die Kupplungseinheiten als selbstverriegelnde Rastkupplung ausgebildet sind, deren Muffen jeweils eine gegenüber der Muffe verschiebbare Verriegelungshülse (9) aufweisen, wobei die beiden Kupplungsteile mittels Schaltelementen zusammenführbar und auseinanderdrückbar und in der Kupplungsstellung aneinander festlegbar sind, wobei die Verriegelungshülsen (9) der jeweiligen Kupplungseinheit (1-4) mit einer für alle Kupplungseinheiten (1-4) gemeinsamen Schaltplatte (11), welche zwischen den beiden Kupplungsteilen (7, 8) liegt, zusammenwirken, wobei die Schaltplatte (11) relativ zu einem Kupplungsteil (8) in Schließ- und Öffnungsrichtung der Kupplungseinheiten (1-4) verstellbar ist und wobei die beiden Kupplungsteile (7, 8) durch wenigstens ein an der Schaltplatte (11) gelagertes Schaltelement (10) mit Eingriff über wenigstens einen kurvenförmig verlaufenden Eingriffsschlitz (13) und einen am anderen Kupplungsteil (7) ausgebildeten Bolzen (14) relativ zueinander in eine Schließ- und eine Öffnungsstellung bewegbar und in ihrer Schließstellung gegenseitig verriegelbar sind, **dadurch gekennzeichnet, dass** das Schaltelement (10) an einer parallel zur Ebene der Schaltplatte (11) verlaufenden Achse (12) an dieser Schaltplatte (11) drehbar gehalten ist, dass die Achse (12) zur Aufnahme des Schaltelementes (10) von einem in der Schaltplatte (11) gelagerten Welle (18) oder von zwei Wellenstummeln gebildet ist, dass die Welle (18) im Bereich zwischen der Schaltplatte (11) und den Schaltelementen (10) in ein Langloch (19) an einem Wandlungsteil (20) des einen Kupplungsteiles (8) eingreift und dass die Schaltplatte (11) unabhängig von den Verriegelungshülsen (9) bewegbar ist.

2. Mehrfach-Kupplungseinrichtung nach Anspruch 1, **dadurch gekennzeichnet, dass** die beiden Kupplungsteile (7,8) durch zusätzliche Verriegelungselemente (15) selbsttätig in der Schließstellung verriegelbar sind.

3. Mehrfach-Kupplungseinrichtung nach Anspruch 1, **dadurch gekennzeichnet, dass** die Kupplungsteile (7,8) und die Schaltplatte (11) entlang einem gemeinsamen, in deren Mittelbereich diese durchstoßenden Führungsrohr (16) verschiebbar geführt sind.

4. Mehrfach-Kupplungseinrichtung nach einem der vorstehenden Ansprüche, **dadurch gekennzeichnet, dass** an einem oder an beiden Enden der Welle (18) oder an beiden Wellenstummeln ein Betätigungshebel (21) anschließt.

5. Mehrfach-Kupplungseinrichtung nach einem der vorstehenden Ansprüche, **dadurch gekennzeichnet, dass** an beiden Enden der Welle (18) oder an beiden Wellenstummeln Schaltelemente (10) angesetzt sind.

6. Mehrfach-Kupplungseinrichtung nach Anspruch 5, **dadurch gekennzeichnet, dass** die an den beiden Enden der Welle (18) oder im Bereich der beiden Wellenstummel angesetzten Schaltelemente (10) Betätigungshebel (21) aufweisen, deren freie Enden über einen Handhabegriff miteinander verbunden sind.

7. Mehrfach-Kupplungseinrichtung nach einem der Ansprüche 1 bis 3, **dadurch gekennzeichnet, dass** an beiden Enden der durchgehenden Welle (18) Schaltelemente (10) mit Eingriffsschlitzen (13) angeordnet sind, wobei nur an einem auf einer Seite angeordneten Schaltelement (10) ein Betätigungshebel (21) ausgebildet ist.

8. Mehrfach-Kupplungseinrichtung nach einem der vorstehenden Ansprüche, **dadurch gekennzeichnet, dass** die Schaltplatte (11) in Richtung der Öffnungsstellung der Kupplungseinheiten (1-4) und/oder die Verriegelungshülsen (9) in Richtung deren Sperrstellung federbelastet ausgeführt sind.

9. Mehrfach-Kupplungseinrichtung nach einem der vorstehenden Ansprüche, **dadurch gekennzeichnet, dass** das Schaltelement (10) von wenigstens einer zwischen den Kupplungseinheiten (1-4) angeordneten Schaltkulisse gebildet ist.

10. Mehrfach-Kupplungseinrichtung nach Anspruch 9, **dadurch gekennzeichnet, dass** die im Innenbereich zwischen den Kupplungsteilen (7, 8) vorgesehene Schaltkulisse von einem an der Welle (18) gehaltenen Schaltelement und einem am anderen Kupplungsteil (7) gehaltenen Bolzen gebildet ist.

11. Mehrfach-Kupplungseinrichtung nach den Ansprüchen 1, 2, 9 und 10, **dadurch gekennzeichnet, dass** das Schaltelement (10) in einem Schlitz des Führungsrohres (16) liegt und verdrehfest mit der Welle (18) verbunden ist und der mit dem Schaltelement (10) zusammenwirkende Bolzen (14) in einen Schlitz des Führungsbolzens (17) eingesetzt ist.

12. Mehrfach-Kupplungseinrichtung nach einem der vorstehenden Ansprüche, **dadurch gekennzeichnet, dass** an zwei einander gegenüberliegenden Rändern der Schaltplatte (11) Lagerhülsen (22) für die Welle (18) oder die Wellenstummel vorgesehen sind, wobei diese Lagerhülsen (22) über die Ränder der Schaltplatte (11) vorstehen und in Langlöchern (19) in den Wandungsteilen (20) des einen Kupplungsteiles (8) eingreifen und somit in diesen quer zur Achse (12) verschiebbar geführt sind.

13. Mehrfach-Kupplungseinrichtung nach Anspruch 2, **dadurch gekennzeichnet, dass** die zusätzlichen Verriegelungselemente (15) als federnd einrastende, selbsttätig verriegelbare Laschen, Bolzen, Riegel od.dgl. ausgebildet sind.

14. Mehrfach-Kupplungseinrichtung nach Anspruch 13, **dadurch gekennzeichnete, dass** die Laschen, Bolzen, Riegel od.dgl. von Hand in die Freigabestellung bringbar sind.

15. Mehrfach-Kupplungseinrichtung nach Anspruch 14, **dadurch gekennzeichnet, dass** das Verriegelungselement (15) in Form eines federbelasteten Bolzens dem Betätigungshebel (21) zugeordnet ist und bei geschlossener Kupplungseinrichtung hinter einer Sperrrampe einrastet, wobei dieser federbelastete Bolzen durch einen am freien Ende des Betätigungshebels (21) ausgebildeten Druckknopf auslösbar ist.

16. Mehrfach-Kupplungseinrichtung nach einem der vorstehenden Ansprüche, **dadurch gekennzeichnet, dass** an wenigstens einem der Kupplungsteile (7,8) an zwei einander gegenüberliegenden Begrenzungen Handgriffe (24) zum Anheben und zum Transport angeordnet sind.

## Claims

1. A multiple coupling device for pipes, in particular hydraulic pipes, having a number of coupling units (1-4) corresponding to the number of connections to be established, each of which coupling units has a plug and a socket receiving the plug, and with first and second coupling parts (7,8), wherein the plug is located on one of these coupling parts and the socket of a respective coupling unit is located on the other of these coupling parts, wherein the coupling units are in the form of a self-locking snap coupling whose sockets each have a locking collar (9) which can slide relative to the socket, wherein the two coupling parts can be brought together and forced apart by means of operating elements and can be located against one another in the coupling position, wherein locking collars (9) of the respective coupling units (1-4) co-operate with a circuit board (11) which is common to all the coupling units (1-4) and which is situated between the two coupling parts (7,8), wherein the circuit board (11) is adjustable relative to one coupling part (8) in the closing and opening direction of the coupling units (1-4) and wherein the two coupling parts (7,8) can be moved by at least one operating element (10) mounted on the circuit board (11) with engagement via at least one engagement slot (13) extending in a curve and a pin (14) formed on the other coupling part (7) relative to one another into a closed position and an open position and they can be mutually locked in their closed position, **characterised in that** the operating element (10) is retained rotatably on an axis (12) on the circuit board (11) extending parallel to the plane of this circuit board (11), **in that** the axis (12) for receiving the operating element (10) is formed by a shaft (18) mounted in the circuit board (11) or by two stub shafts, **in that** in the zone between the circuit board (11) and the operating elements (10) the shaft (18) engages into a slot (19) in a wall part (20) of one coupling part (8), and **in that** the circuit board (11) can be moved independently of the locking collars (9).

2. A multiple coupling device according to Claim 1, **characterised in that** the two coupling parts (7,8) can be locked automatically in the closed position by additional locking elements (15).

3. A multiple coupling device according to Claim 1, **characterised in that** the coupling parts (7,8) and the circuit board (11) are guided slidably along a common guide tube (16) passing through the latter in its central region.

4. A multiple coupling device according to any one of the preceding Claims, **characterised in that** an actuating lever (21) is attached to one or both ends of the shaft (18) or to both stub shafts.

5. A multiple coupling device according to any one of the preceding Claims, **characterised in that** operating elements (10) are fitted to both ends of the shaft (18) or to both stub shafts.

6. A multiple coupling device according to Claim 5, **characterised in that** the operating elements (10) fitted to both ends of the shaft (18) or in the vicinity of both stub shafts have actuating levers whose free ends are joined together via a handle.

7. A multiple coupling device according to any one of Claims 1 to 3, **characterised in that** at both ends of the continuous shaft (18) there are provided operating elements (10) with engagement slots (13), wherein an actuating lever (21) is formed only on one operating element (10) provided on one side.

8. A multiple coupling device according to any one of the preceding Claims, **characterised in that** the circuit board (11) is spring-loaded towards the open position of the coupling units (1-4) and/or the locking collars (9) are spring-loaded towards their locked position.

9. A multiple coupling device according to any one of the preceding Claims, **characterised in that** the operating element (10) is formed by at least one slotted link disposed between the coupling units (1-4).

10. A multiple coupling device according to Claim 9, **characterised in that** the slotted link provided in the inner zone between the coupling parts (7,8) is formed by an operating element retained on the shaft and by a pin retained on the other coupling part (7).

11. A multiple coupling device according to Claims 1,2,9 and 10, **characterised in that** the operating element (10) is situated in a slot of the guide tube (16) and is connected with the shaft (18) in a manner precluding relative rotation and the pin (14) co-operating with the operating element (10) is inserted into a slot of the guide pin (17).

12. A multiple coupling device according to any one of the preceding Claims, **characterised in that** bearing sleeves (22) for the shaft (18) or the stub shafts are provided on two opposing edges of the circuit board (11), wherein these bearing sleeves (22) project over the edges of the circuit board (11) and engage in slots (19) in the wall parts (20) of one coupling part (8) and are thus guided slidably therein transversely to the axis (12).

13. A multiple coupling device according to Claim 2, **characterised in that** the additional locking elements (15) are in the form of resiliently engaging, automatically locking straps, pins, bolts or the like.

14. A multiple coupling device according to Claim 13, **characterised in that** the straps, pins, bolts or the like can be brought manually into the release position.

15. A multiple coupling device according to Claim 14, **characterised in that** the locking element (15) in the form of a spring-loaded pin is associated with the actuating lever (21) and when the coupling device is closed it engages behind a blocking ramp, it being possible for this spring-loaded pin to be released by a push-button formed on the free end of the actuating lever (21).

16. A multiple coupling device according to any one of the preceding Claims, **characterised in that** handles (24) for lifting and for conveyance are provided on at least one of the coupling parts (7,8) at two opposing boundaries.

## Revendications

1. Dispositif d'accouplement multiple pour des conduites, en particulier des conduites hydrauliques, comprenant un nombre d'unités d'accouplement (1-4) correspondant au nombre de liaisons à réaliser, qui présentent chacune une fiche et un manchon recevant la fiche, avec des premiers et deuxièmes éléments d'accouplement (7, 8), dans lequel
- la fiche est fixée à l'un et le manchon à l'autre de ces éléments d'accouplement d'une unité d'accouplement respective,
- les unités d'accouplement présentent la forme d'un accouplement à crans à verrouillage automatique dont les manchons présentent chacun une douille de verrouillage (9) coulissante par rapport au manchon,
- les deux éléments d'accouplement peuvent être rapprochés et écartés au moyen d'éléments de commutation et fixés l'un à l'autre dans la position d'accouplement,
- les douilles de verrouillage (9) de l'unité d'accouplement (1-4) respective coopèrent avec une platine de commutation (11) commune à toutes les unités d'accouplement (1-4), située entre les deux éléments d'accouplement (7, 8), la platine de commutation (11) étant réglable par rapport à un élément d'accouplement (8) dans les directions de fermeture et d'ouverture des unités d'accouplement (1-4), et
- les deux éléments d'accouplement (7, 8) sont déplaçables l'un par rapport à l'autre dans une position de fermeture et d'ouverture à l'aide d'au moins un élément de commutation (10) logé sur la platine de commutation (11) en coopération avec au moins une fente d'engagement (13) s'étendant en forme de courbe et un boulon (14) prévu sur l'autre élément d'accouplement (7), et verrouillables mutuellement dans leur position de fermeture,
**caractérisé en ce que**
l'élément de commutation (10) est logé en rotation sur cette platine de commutation (11) sur un axe (12) s'étendant parallèlement au plan de la platine de commutation (11), l'axe (12) pour recevoir l'élément de commutation (10) est formé par un arbre (18) logé dans la platine de commutation (11) ou par deux bouts d'arbre, l'arbre (18) s'engage, dans la zone entre la platine de commutation (11) et les éléments de commutation (10), dans un trou oblong (19) prévu dans un élément de paroi (20) de l'un des éléments d'accouplement (8), et la platine de commutation (11) est déplaçable indépendamment des douilles de verrouillage (9).

2. Dispositif d'accouplement multiple selon la revendication 1,
**caractérisé en ce que**
les deux éléments d'accouplement (7, 8) sont verrouillables automatiquement dans la position de fermeture à l'aide d'éléments de verrouillage (15) supplémentaires.

3. Dispositif d'accouplement multiple selon la revendication 1,
**caractérisé en ce que**
les éléments d'accouplement (7, 8) et la platine de commutation (11) sont guidés en coulissement le long d'un tube de guidage (16) commun traversant leur zone centrale.

4. Dispositif d'accouplement selon l'une quelconque des revendications précédentes,
**caractérisé en ce que**
sur l'une ou les deux extrémités de l'arbre (18) ou les deux bouts d'arbre est raccordé un levier d'actionnement (21).

5. Dispositif d'accouplement selon l'une quelconque des revendications précédentes,
**caractérisé en ce que**
des éléments de commutation (10) sont joints aux deux extrémités de l'arbre (18) ou aux deux bouts d'arbre.

6. Dispositif d'accouplement multiple selon la revendication 5,
**caractérisé en ce que**
les éléments de commutation (10) joints aux deux extrémités de l'arbre (18) ou dans la zone des deux bouts d'arbre présentent des leviers d'actionnement (21) dont les extrémités libres sont reliées les unes aux autres par une manette.

7. Dispositif d'accouplement multiple selon l'une quelconque des revendications 1 à 3,
**caractérisé en ce que**
les deux extrémités de l'arbre (18) traversant comportent des éléments de commutation (10) avec des fentes d'engagement (13), un levier d'actionnement (21) n'étant prévu que sur un élément de commutation (10) disposé d'un côté.

8. Dispositif d'accouplement multiple selon l'une quelconque des revendications précédentes,
**caractérisé en ce que**
la platine de commutation (11) est sollicitée par ressort en direction de la position d'ouverture des unités d'accouplement (1-4) et/ou les douilles de verrouillage (9) sont sollicitées par ressort en direction de leur position de blocage.

9. Dispositif d'accouplement multiple selon l'une quelconque des revendications précédents,
**caractérisé en ce que**
l'élément de commutation (10) est formé par au moins une coulisse de commutation disposée entre les unités d'accouplement (1-4).

10. Dispositif d'accouplement multiple selon la revendication 9,
**caractérisé en ce que**
la coulisse de commutation prévue dans la zone intérieure entre les éléments d'accouplement (7, 8) est formée par un élément de commutation logé sur l'arbre (18) et un boulon logé sur l'autre élément d'accouplement (7).

11. Dispositif d'accouplement multiple selon les revendications 1, 2, 9 et 10,
**caractérisé en ce que**
l'élément de commutation (10) se situe dans une fente du tube de guidage (16) et est solidaire en rotation avec l'arbre (18), et le boulon (14) coopérant avec l'élément de commutation (10) est inséré dans une fente du boulon de guidage (17).

12. Dispositif d'accouplement multiple selon l'une quelconque des revendications précédentes,
**caractérisé en ce que**
sur deux bords de la platine de commutation (11) situés en regard l'un de l'autre, des douilles de palier (22) pour l'arbre (18) ou les bouts d'arbre dépassent des bords de la platine de commutation (11) et s'engagent dans des trous oblongs (19) prévus dans les éléments de paroi (20) de l'un des éléments d'accouplement (8), en étant ainsi guidées en coulissement dans ceux-ci transversalement à l'axe (12).

13. Dispositif d'accouplement multiple selon la revendication 2,
**caractérisé en ce que**
les éléments de verrouillage (15) supplémentaires sont des éclisses, des boulons, des verrous ou autres, à encliquetage élastique et à verrouillage automatique.

14. Dispositif d'accouplement multiple selon la revendication 13,
**caractérisé en ce que**
les éclisses, boulons, verrous ou autres peuvent être amenés manuellement en position de déverrouillage.

15. Dispositif d'accouplement multiple selon la revendication 14,
**caractérisé en ce que**
l'élément de verrouillage (15) en forme de boulon sollicité par ressort est associé au levier d'actionnement (21) et s'encliquète derrière une rampe de blocage lorsque le dispositif d'accouplement est fermé, ce boulon sollicité par ressort pouvant être déclenché par un bouton-poussoir prévu à l'extrémité libre du levier d'actionnement (21).

16. Dispositif d'accouplement multiple selon l'une quelconque des revendications précédentes,
**caractérisé en ce que**
sur au moins l'un des éléments d'accouplement (7, 8), au niveau de deux bordures situées en regard l'une de l'autre, des poignées (24) sont prévues pour le soulèvement et le transport.
